# EUROPÄISCHE PATENTANMELDUNG

(11) **EP 1 136 119 A1**
(43) Veröffentlichungstag der Anmeldung: **26.09.2001**
(21) Anmeldenummer: 01105195.0
(22) Anmeldetag: 03.03.2001
(51) Int. Cl.: B01J 2/02, C09B 67/00, C04B 35/626

(54) **Redispergiebares Granulat**

(30) Priorität: 18.03.2000 EP 00105808
(71) Anmelder: Degussa Aktiengesellschaft, 40474 Düsseldorf (DE)
(72) Erfinder: Tassilo, Moritz, Dr., 09599 Freiberg (DE); Reetz, Teja, Prof. Dr., 15566 Schöneiche (DE); Deller, Klaus, Dr., 63515 Hainburg (DE); Gutsch, Andreas, Dr., 63691 Ranstadt (DE); Krämer, Michael, 63477 Maintal (DE); Günther, Michael, Dr., 63791 Karlstein (DE)

(57) **Zusammenfassung**

Granulate mit Einzelgranalien mit nahezu kugelförmigen Partikeln homogener Dichteverteilung werden hergestellt, indem man Feststoffe in Suspensionen überführt, die Suspensionen zerstäubt und mittels Sublimationstrocknung trocknet.

## Beschreibung

Die Erfindung betrifft ein Granulat, ein Verfahren zu seiner Herstellung, sowie seine Verwendung.

Sehr feinteilige Feststoffe versprechen aufgrund ihrer großen spezifischen Oberfläche und ihrer geringen Primärteilchengröße eine Reihe von vorteilhaften Eigenschaften, wie beispielsweise ein hohes Adsorptionsvermögen, eine hohe chemische Reaktionsbereitschaft, eine große Sinteraktivität und, im Falle keramischer Pulver, sehr feinteilige Gefügestrukturen, die einen Festigkeitszuwachs im Bauteil bewirken können. Darüber hinaus werden feinteilige Feststoffe häufig als funktionsgebende Füllstoffe im Bereich Lacke, Coatings etc. eingesetzt.

Aus handhabungstechnischer Sicht nachteilig ist jedoch, daß mit abnehmender Feststoffteilchengröße die Handhabungsschwierigkeiten beträchtlich zunehmen. Die Feststoffe liegen zumeist in agglomeriertem Zustand vor und besitzen eine schlechte Rieselfähigkeit als Pulver, beziehungsweise sind, falls sie als Suspension vorliegen, mit bekannten Methoden nicht in ein redispergierbares trockenes Pulver zu überführen.

Als trockene Pulver bereiten die feinteiligen Feststoffe erhebliche Probleme bei Transport-, Förder- und Lagerprozessen sowie bei der trockenen sowie feuchten Verformung durch Pressen, Feuchtgranulation oder Extrusion. Gerade bei sehr feinen, sinteraktiven Pulvern ist die Vermeidung von Packungsinhomogenitäten bei der Verformung sehr schwierig, sodaß die Wahrscheinlichkeit der Defektentstehung mit zunehmender Pulverfeinheit stark anwächst (Oberacker, R.; Agniel, Y.; Thümmler, F.: Pulvermetallurgie in Wissenschaft und Praxis, Bd. 7, S. 185, VDI-Verlag Düsseldorf, 1991).

Um disperse Fesstoffe handhaben und weiterverarbeiten zu können, müssen sie in Granulate überführt werden.

Unter dem Begriff Granulierung wird dabei die Erzeugung einer Sekundärkörnung mit gewünschten Eigenschaften aus der wegen ihrer Feinheit für eine Weiterverarbeitung ungeeigneten Primärkörnung verstanden (Gottschalk, A.: Keramische Zeitschrift, 38 (1986) 4, S. 184-186).

Granulate stellen im Formgebungsprozeß Zwischenprodukte dar, die die physikalischen und mechanischen Eigenschaften eines Feststoffes maßgeblich beeinflussen (Ingenerf, G.: Keramische Zeitschrift, 48 (1996) 4, S. 315-317).

Für eine technisch sinnvolle Weiterverarbeitung ist es daher unumgänglich, eine Granulierung vorzunehmen (Matje, P.; Martin, K. P.; Schetz, K. A.: Keramische Zeitschrift, 38 (1986) 4, S. 189). Die für eine Weiterverarbeitung beim anschließenden Pressen oder Extrudieren und Sintern optimalen Granulateigenschaften sind bestimmt durch:
- gute Rieselfähigkeit,
- hohe Schüttdichte,
- reproduzierbaren Feuchtegehalt,
- möglichst gleichmäßige, konstante und nicht zu grobe Körnung,
- Staubfreiheit,
- elastische Verformbarkeit der Einzelgranalien an ihren Berührungspunkten während Transport und Lagerung sowie
- vollständige Zerstörbarkeit in der Preßform.

Grundvoraussetzung für eine gute Rieselfähigkeit ist die nahezu sphärischer Form der Granulatteilchen.

Das wohl am weitesten verbreitete Granulierverfahren zur Erzeugung von Preßgranulaten in der keramischen Industrie ist die Sprühtrocknung. Durch das Versprühen keramischer Schlicker und gleichzeitige Verdampfungstrocknung der flüssigen Phase entstehen Granalien in Kugelform, die sowohl eine gute Rieselfähigkeit als auch ein ausreichend hohes Schüttgewicht aufweisen. Von Nachteil ist die häufig anzutreffende Hohlkugelform sowie die hohe Härte der Granalien. Aufgrund dieser Eigenschaften erfordern Sprühgranulate bei der Formgebung hohe Preßdrücke, um eine vollständige Zerstörung der Hohlkugeln und eine Ausfüllung der Hohlräume mit Bruchstücken zu gewährleisten. Nicht vollständig zerstörte Granalien hinterlassen im Grünkörper ausgeprägte Korngrenzen, die vor allem den Sintervorgang negativ beeinflussen (Mazanek, J.; Gizycki, U. v.; Khwaja, Z.: cfi/Ber. DKG, 70 (1993) 6, S. 272-274; Shaw, F. V.: Am. Ceram. Soc. Bull. 79 (1990) 9, S. 1484-89). Weiterhin tritt bei zu trockenen Granulaten als Folge des spröd-elastischen Verhaltens der Körner eine große elastische Rückdehnung nach der Preßformgebung auf.

Die genannten Nachteile der Hohlkugelbildung werden durch eine Aufbaugranulierung vermieden. Diese wird entweder als eine Wirbelschichtgranulierung (Schöps, W.; Beer, H.: DKG-Jahrestagung 1993, Kurzreferate, Weimar, 6.-8. Okt. 1993, S. 276-278) oder durch mechanisches Abrollen vorgebildeter Granulatkeime in einer Pulverschüttung durchgeführt. Im letztgenannten Fall werden Granalien mit deutlichen Texturen, die unter Druckbelastung zu einem schalenförmigen Abplatzen der aufgebauten Schichten führen, erhalten. Im Ergebnis der Wirbelschichtgranulation entstehen kompakt aufgebaute, abgerundete, ungleichmäßig geformte Granalien (Ingenerf, G.: Keramische Zeitschrift, 48 (1996) 4, S. 315-317). Trotz der nichtsphärischen Gestalt werden die gute Rieselfähigkeit und Verpreßbarkeit hervorgehoben (Voigt, M.; Herrmann, J.; Böber, R.; Wand, B.; Witschel, H.; Seege, A.: Keramische Zeitschrift, 43 (1991) 2, S. 87-89).

Nachteilig kann sich die relativ hohe Druckfestigkeit der Wirbelschichtgranalien beim Formgebungsprozeß auswirken und zu einer hohen Restporosität im Grünkörper führen.

Die Bindemechanismen, die die mechanische Festigkeit der über die bekannten Verfahren hergestellten Granalien bewirken, sind zum einen Kapillarkräfte, die infolge des Verdampfens der Suspensionsflüssigkeit wirksam werden und die die Feststoffpartikeln in sehr feste Bindungen ziehen können.

Zum anderen sind Bindungen durch Feststoffbrücken auskristallisierender Zusatzstoffe oder hochviskoser Bindemittel sowie durch organische Makromoleküle möglich. Vor allem bei nichtthermischen, mechanischen Granulierverfahren, wie dem Kompaktieren, sind außerdem formschlüssige Bindungen durch Verhaken von Teilchen zu festzustellen.

Für Anwendungsgebiete, in denen eine Redispergierung der Granulate gefordert wird, sind die oben angeführten Bindemechanismen in der Regel zu stark. Insbesondere bei extrem feinteiligen Feststoffen, deren Primärpartikelgröße in Nanometerbereich liegt, wird beobachtet, daß es bei den oben angeführten Methoden der Formgebung zur Ausbildung von Feststoffbrücken kommt, weil die Partikeln aufgrund ihrer hohen spezifischen Oberfläche eine Löslichkeit in der Suspensionsmatrix besitzen können. Eine Redispergierung, die eine Teilchengrößenverteilung, die der der Ausgangsfeststoffe entspricht bewirkt, wird nur daher zumeist nicht beziehungsweise nur durch extrem hohen Energieeintrag erreichbar.

Um zu einem vollständig redispergierbaren Granulat zu gelangen, müssen schwächere Bindungskräfte zwischen den Primärteilchen wirksam werden. Dafür bietet sich die Sublimations- oder Gefriertrocknung an, ein Prozeß, bei dem ein tiefgefrorenes Material im Vakuum durch Sublimation des Lösungsmittels getrocknet wird. Da bei Anwendung der Gefriertrocknung die flüssige Phase im festen Zustand vorliegt, kommen während der Sublimation keine Kapillarkräfte zur Wirkung. Die Teilchen nähern sich nicht an, und es entstehen daher keine harten Agglomerate (Hausner, H.: Fortschrittsberichte DKG, 8 (1993), S. 107-121).

In Granulaten, denen über Gefriertrocknung das Suspensionsmedium entzogen wurde, werden lediglich van-der-Waals-Kräfte oder elektrostatische Kräfte wirksam, sofern den Suspensionen keine Hilfsstoffe zugesetzt werden, die zur Ausbildung von Materialbrücken führen.

Van-der-Waals-Kräfte ergeben sich aufgrund der elektrischen Dipolmomente von Atomen und Molekülen. Sie besitzen eine sehr geringe Reichweite. Die elektrostatischen Kräfte sind bedingt durch Teilchen mit Ladungen unterschiedlichen Vorzeichens. Unterschiedliche Ladungen können bereits als Überschußladung vorhanden sein oder beim Kontakt von Festkörpern durch Elektronenübertritt entstehen (Kontaktpotential). Die aufgenommenen Ladungen sind bei elektrischen Nichtleitern in Oberflächenschichten bis 1 µm lokalisiert. Die van-der-Waals-Kraft als Bindungsmechanismus wird in entscheidendem Maße von der Primärpartikelgröße beeinflußt und wird erst bei Partikeln < 100 µm bei einer angenommenen Stoffdichte von 3 g/cm³ größer als die konkurrierend wirkende Gewichtskraft.Das heißt: Bei größeren Teilchen kann über diesen Haftmechanismus keine Granulation vermittelt werden (Bartusch, R.: Das Keramiker-Jahrbuch 1998, S. 24, Bauverlag, Wiesbaden u. Berlin).

Aufgabe der Erfindung ist es, ein Granulat zu entwickeln, das nahezu kugelförmig und damit sehr gut rieselfähig ist, dessen Einzelgranalien eine homogene Struktur aufweisen, und das vollständig unter Anwendung der zur Dispergierung des Ausgangsfeststoffes erforderlichen Dispergierbedingungen redispergiert werden kann.

Gegenstand der Erfindung ist ein Granulat aus dispersen, feinteiligen Feststoffen mit Primärteilchen-Grössen von kleiner als 10 µm, welches dadurch gekennzeichnet ist, daß die Einzelgranalien nahezu kugelförmige Partikel homogener Dichteverteilung darstellen, die sich unter den für die Ausgangsfeststoffe angewandten Dispergierbedingungen vollständig redispergieren lassen.

Dieses Granulat zeichnet sich durch eine hervorragende Rieselfähigkeit, eine sehr geringe Einzelgranalienfestigkeit sowie eine vollständige Redispergierbarkeit unter den für die Ausgangsfestoffe angewendeten Dispergierbedingungen aus.

Für die Gewährleistung der vollständigen Redispergierbarkeit des Granulates spielt die Einfriergeschwindigkeit der Suspension eine ausschlaggebende Rolle. Nur die Kombination der Gefriertrocknung mit einem Sprühgefrieren verhindert die Ausbildung festerer Partikelkontakte, die einer Redispergierung im Wege stehen. Eine langsamere Einfriertechnik der unzerteilten Suspension, zum Beispiel durch Übergießen der Suspension mit flüssigem Stickstoff (Reetz, T.: Moritz, T.: Offenlegungsschrift DE 41 18 752 A1 (1992)) führt nicht zur gewünschten vollständigen Redispergierbarkeit.

Als Ausgangsfeststoff für die Granulatherstellung können sowohl keramische und metallische als auch polymere Materialien sowie Ruße verwendet werden.

In einer bevorzugten Ausführungsform der Erfindung können als Ausgangsstoffe pyrogen hergestellte Oxide und/oder Mischoxide von Metallen und/oder Metalloiden eingesetzt werden. Dies sind insbesondere pyrogen hergestelltes TiO₂, SiO₂, Al₂O₃ sowie deren Mischoxide. Diese Stoffe werden beschrieben in Ullmann's Enzyklopädie der technischen Chemie, 4 Auflage, Band 21, Seite 464 (1982).

Sie können hergestellt werden, indem man eine verflüchtigbare Verbindung des Metalles beziehungsweise Metalloids mittels einer Knallgasflamme hydrolysiert. Als verflüchtigbare Verbindung können beispielsweise die entsprechenden Chloride oder Methylchloride eingesetzt werden.

Derartige Oxide können beispielsweise sein Aerosil OX 50, Titandioxid P 25. In einer weiteren Ausführungsform der Erfindung kann als Ausgangsstoff Ruß eingesetzt werden.

Erfindungsgemäß können die dispersen feinteiligen Feststoffe im Ausgangszustand als trockene oder feuchte Pulver vorliegen.

Ein weiterer Gegenstand der Erfindung ist ein Verfahren zur Herstellung des Granulates, welches dadurch gekennzeichnet ist, daß man die feinteiligen Feststoffe in fließfähige Suspensionen überführt, diese Suspensionen mit einer geeigneten Zerstäubungstechnik zerteilt, als disperses Kollektiv einfriert und anschließend mittels Sublimationstrocknung unter Ausschluß der Wirkung von Kapillarkräften trocknet.

Durch ein Zerteilen fließfähiger Suspensionen über Sprühdüsen oder rotierende Scheiben werden Tröpfchengrößenverteilungen erzeugt, die die Granaliengrößenverteilung direkt beeinflussen. Nach dem Einfrieren der zerstäubten Suspension mit Tröpfchengrößen zwischen 50 und 500 µm in einer Kühlflüssigkeit oder einem kalten Gasstrom ist die Granalienform und -größe bereits vorgegeben. Bei der anschließenden Gefriertrocknung erfolgt keine weitere Kompaktierung des Materials. Ebenso bleibt die Granalienform unverändert. Nach der Trocknung bewirken die innerhalb der Einzelgranalien vorherrschenden Adhäsionskräfte den Zusammenhalt der Primärpartikeln.

Aufgrund der Oberflächenspannung des Suspensionsmediums nehmen die Sprühtropfen Kugelform an, die im Granulat erhalten bleibt. Die Dichte der Einzelgranalien wird vom Feststoffgehalt der Suspension vorgegeben. Die Granalien besitzen eine homogene Teilchenpackung.

Eine Redispergierung von Granulaten, in denen diese schwachen Haftkräfte wirken, erfordert daher keinen größeren energetischen Aufwand, als er für die Dispergierung der Ausgangsfeststoffe notwendig ist. Sofern im Ausgangspulver herstellungsbedingt Agglomerate vorliegen, die stärkere Bindungskräfte aufweisen, ist der Energiebetrag für die Redispergierung dieser primären Agglomerate sogar geringer.

Zur Herstellung der Suspensionen kann man verschiedene organische und/oder anorganische Lösungsmittel, insbesondere Wasser, einsetzen.

Als Kühlmedien können tiefkalte, verflüssigte Gase und/oder tiefkalte Flüssigkeiten eingesetzt werden.

### Beispiel 1

Aus einem hochdispersen TiO₂-Pulver (P 25, Fa. Degussa-Huels) wird eine Suspension mit einem Feststoffgehalt von 30 Gew.-% durch Einrühren in Wasser hergestellt. Eine Stabilisierung der Suspension erfolgt dabei über das Dispergierhilfsmittel Dolapix CA (Fa. Zschimmer & Schwarz, Lahnstein).

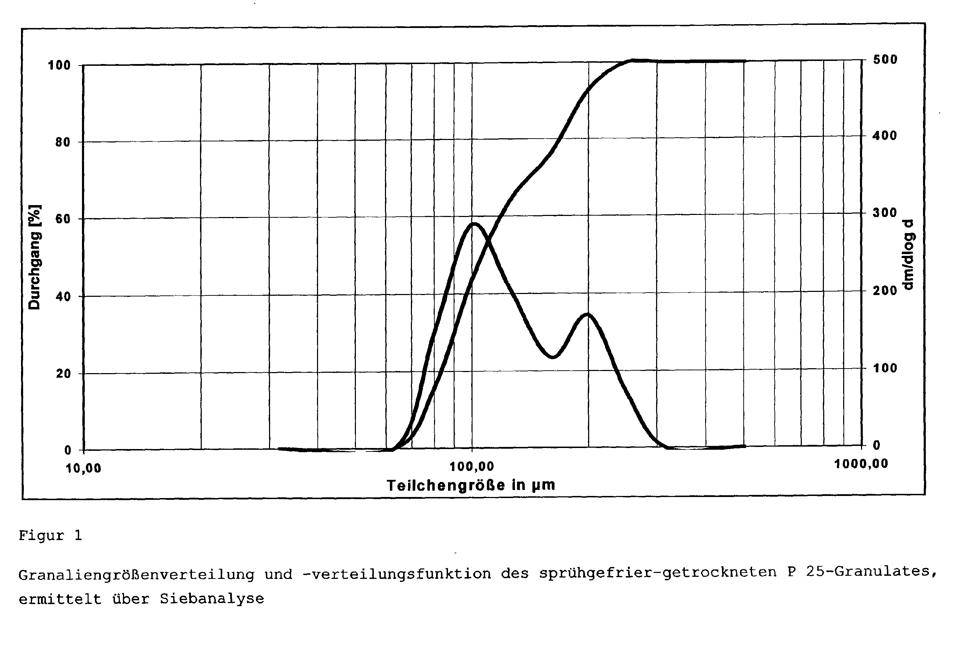

Die Suspension wird anschließend mittels einer Zweistoffdüse (Ø= 1 mm) in flüssigen Stickstoff eingesprüht und schlagartig eingefroren. Nach einer anschließenden Gefriertrocknung wird ein sehr gut rieselfähiges Granulat erhalten. Die Granaliengrößenverteilung des erhaltenen Granulates ist der Figur 1 zu entnehmen. Die Schüttdichte des Granulates beträgt ca. 300 g/l.

Die Granalien sind sehr weich, werden aber während der Lagerung und des Handlings nicht zerstört.

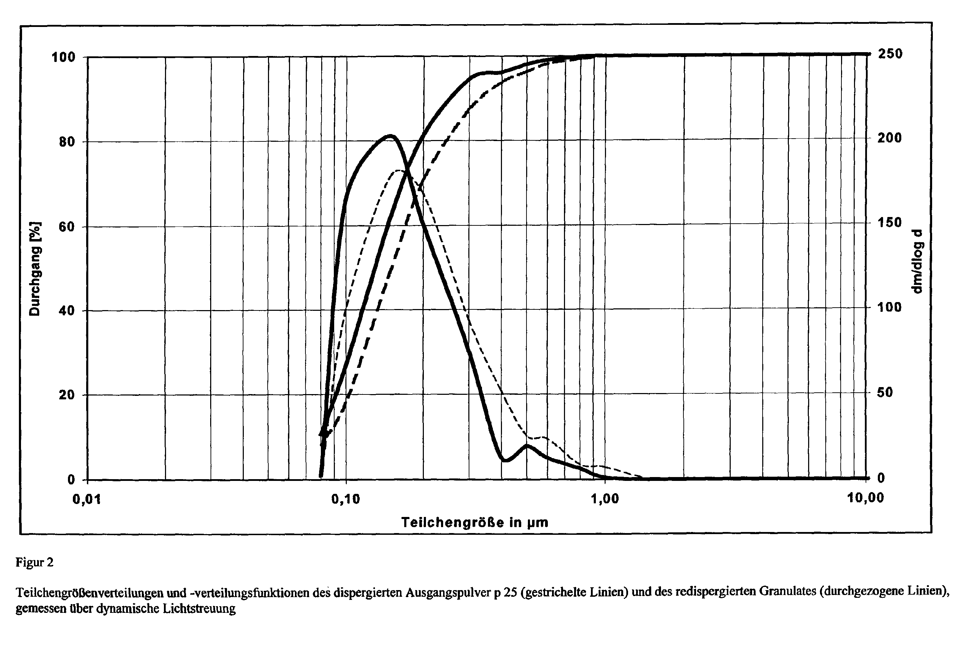

Für die Untersuchung der Redispergierbarkeit werden 200 mg des Ausgangspulvers und des Granulates in jeweils 100 ml Wasser 15 min mit einem Magnetrührer gerührt und zusätzlich 12 min im Ultraschallbad sowie 30 s mit einem Ultraschallfinger behandelt. Die Teilchengrößenverteilungen werden anschliessend über dynamische Lichtstreuung (UPA, Fa. Leeds & Northrup) bestimmt. Überraschenderweise sind beide Teilchengrößenverteilungen (Figur 2) vergleichbar. Es gibt keine Hinweise auf unzerstörte Agglomerate, was sowohl eine vollständige Dispergierung des Ausgangspulvers als auch eine vollständige Redispergierung des Granulates anzeigt.

Eine Behandlung beider Materialien durch Rühren ohne zusätzliche Ultraschalleinwirkung zeigt in beiden Fällen noch unvollständig zerstörte Pulveragglomerate an.

### Beispiel 2

Ein hochdisperses SiO₂-Pulver Aerosil OX 50 (Fa. Degussa-Hüls), welches auf pyrogenem Wege hergestellt wurde, wird zu einer wäßrigen Suspension mit einem Feststoffgehalt von 25 Gew.-% verarbeitet und durch Einsprühen mittels einer Zweistoffdüse (Ø = 1,5 mm) in flüssigen Stickstoff sowie anschließende Gefriertrocknung in ein Granulat überführt. Die Granaliengrößenverteilung wird durch Siebanalyse ermittelt. Der Volumenmedianwert der Teilchengrößen-Verteilung beträgt 315 µm.

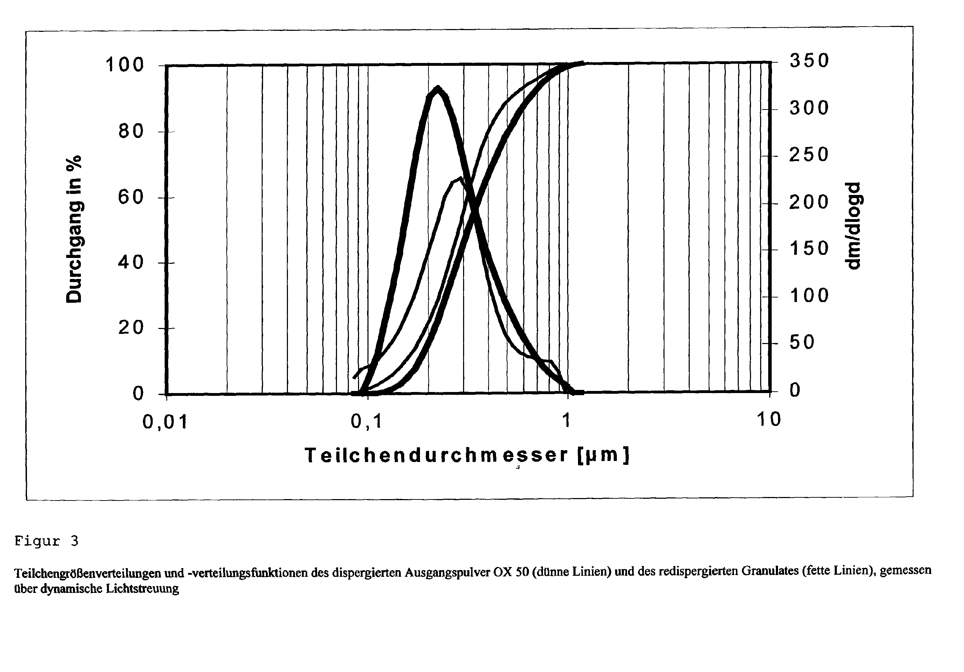

Eine Teilchenfraktion (80 - 250 µm) des erhaltenen Granulates wird zu Redispergierungsuntersuchungen herangezogen. Die Granulatfraktion wird dabei in der gleichen Weise wie das zu dispergierende Ausgangspulver präpariert. Jeweils 200 mg der Granulatfraktion und des Pulvers Aerosil OX 50 werden in 100 ml Wasser eingerührt. Die Rührdauer beträgt 15 min. Anschließend werden die Dispersionen 12 min in der Ultraschallwanne und zusätzlich 4 min mit einem Ultraschallfinger behandelt. Die über dynamische Lichtstreuung (UPA, Fa. Leeds & Northrup) ermittelten Teilchengrößenverteilungen (Figur 3) belegen, daß die Granulatfraktion unter den angewendeten Bedingungen vollständig redispergiert werden kann. Die Teilchengrößen-Verteilung ist nahezu identisch mit der des Ausgangspulvers.

## Patentansprüche

1. Granulat aus dispersen, feinteiligen Feststoffen mit Primärteilchengrößen von kleiner als 10 µm, **gekennzeichnet dadurch**, daß die Einzelgranalien nahezu kugelförmige Partikel homogener Dichteverteilung darstellen, die sich unter den für die Ausgangsfesstoffe angewandten Dispergierbedingungenen vollständig redispergieren lassen.

2. Verfahren zur Herstellung des Granulates gemäß Anspruch 1, **dadurch gekennzeichnet, daß** man die feinteiligen Feststoffe in fließfähige Suspensionen überführt, diese Suspensionen mit einer geeigneten Zerstäubungstechnik zerteilt, als disperses Kollektiv einfriert und anschließend mittels Sublimationstrocknung unter Ausschluß der Wirkung von Kapillarkräften trocknet.
